# EUROPEAN PATENT APPLICATION

(11) **EP 1 936 816 A1**
(43) Date of publication of application: **25.06.2008**
(21) Application number: 07742362.2
(22) Date of filing: 25.04.2007
(51) Int. Cl.: H04B 1/26, H04B 1/10

(54) **RECEPTION DEVICE AND ELECTRONIC DEVICE USING THE SAME**

(30) Priority: 27.04.2006 JP 2006123208
(71) Applicant: Matsushita Electric Industrial Co., Ltd., Kadoma-shi Osaka 571-8501 (JP)
(72) Inventor: OKADA, Eiji c/o Matsushita Electric Industrial Co., Ltd., Osaka, 540-6207 Japan (JP); OZEKI, Hiroaki c/o Matsushita Electric Industrial Co., Ltd., Osaka, 540-6207 Japan (JP); UMEDA, Takashi c/o Matsushita Electric Industrial Co., Ltd., Osaka, 540-6207 Japan (JP)
(74) Representative: Pautex Schneider, Nicole Véronique
(86) International application number: PCT/JP2007/058927
(87) International publication number: WO 2007/125947

(57) **Abstract**

In an image rejection mixer of a receiving device (14) of the invention, when a signal of a first radio frequency band is input to input terminal (16), first mixer (17) and second mixer (18) convert the input signal of the first radio frequency band into a signal of a first intermediate frequency band by the use of a first local signal from local signal oscillation unit (19) and a filter circuit attenuates an image disturbing signal existing in the first intermediate frequency band, and when a signal of a second radio frequency band is input to the input terminal, first mixer (17) and second mixer (18) convert the input signal of the second radio frequency band into a signal of a second intermediate frequency band by the use of a second local signal from the local signal oscillation unit and the filter circuit attenuates an image disturbing signal existing in the second intermediate frequency band. The first intermediate frequency band and the second intermediate frequency band are partly overlapped with each other.

## Description

### TECHNICAL FIELD

The present invention relates to a receiving device mounted with an image rejection mixer for attenuating image disturbing signals and an electronic apparatus by the use of the receiving device.

### BACKGROUND ART

In the past, an image rejection mixer for attenuating image disturbing signals whose frequency is symmetrical to a frequency of desired waves around a local signal frequency was used in a communication device or an AV device.

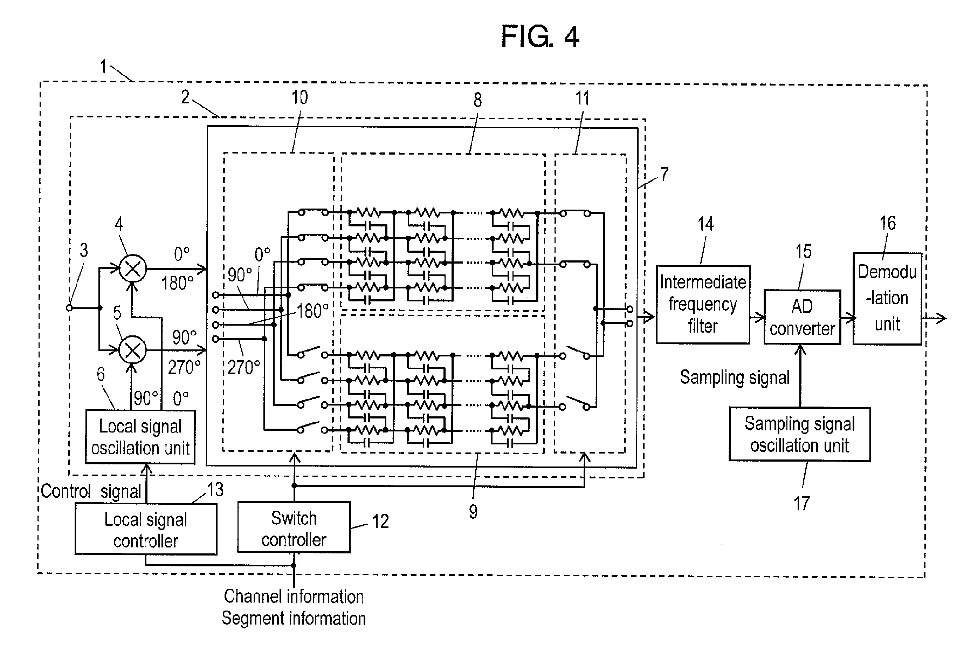

Fig. 4 is a block diagram illustrating a receiving device mounted with the known image rejection mixer. In Fig. 4, image rejection mixer 2 of known receiving device 1 includes input terminal 3 to which signals of a first radio frequency bandwidth or signals of a second frequency bandwidth, which is narrower than the first radio frequency bandwidth are input, first mixer 4 and second mixer 5 connected directly or indirectly in parallel to input terminal 3, and local signal oscillation unit 6 for transmitting local signals of mutually different phases to first mixer 4 and second mixer 5. In addition, image rejection mixer 2 includes filter unit 7 for synthesizing signals from first mixer 4 and signals from second mixer 5 by rotating the phase of the signals from at least one of first mixer 4 and second mixer 5.

Filter unit 7 includes first filter circuit 8 for first intermediate frequency band configured by a poly phase filter, second filter circuit 9 for second intermediate frequency band configured by the poly phase filter, first switch unit 10 for switching and inputting the signals to first filter circuit 8 or second filter circuit 9, and second switch unit 11 for switching and outputting the signals from first filter circuit 8 or second filter circuit 9.

Receiving device 1 includes image rejection mixer 2, intermediate frequency filter 14 for attenuating unnecessary signals which cannot be attenuated by image rejection mixer 2, AD conversion unit 15 connected to an output side of intermediate frequency filter 14, demodulation unit 16 connected to an output side of AD conversion unit 15, and sampling signal oscillation unit 17 connected to the other input terminal of AD conversion unit 15 for generating sampling signals.

Receiving device 1 includes switch controller 12 for acquiring channel information and segment information from a channel setting unit (not shown) for controlling first switch unit 10 and second switch unit 11 on the basis of the information. Receiving device 1 includes local signal controller 13 for acquiring the channel information and the segment information from the channel setting unit and controlling the frequencies of the local signals of local signal oscillation unit 6 on the basis of the information.

As a prior art document on the application of the invention, there is known Patent Document 1.

However, in receiving device 1, in order to receive a plurality of desired waves of different bandwidths such as switching reception of 1 segment broadcasting and 3 segment broadcastings of a terrestrial digital broadcasting, filter circuits 8 and 9 configured by the poly phase filters for respective bandwidths and switch units 10 and 11 for switching filter circuits 8 and 9 are required. As a result, the size of receiving device 1 may be larger.

Patent Document 1: Japanese Patent Unexamined Publication No. 2003-298356

### DISCLOSURE OF THE INVENTION

In an image rejection mixer of a receiving device according to the invention, when signals for a first radio frequency band is input to an input terminal, first and second mixers convert the input signals of the first radio frequency band into signals of a first intermediate frequency band by the use of first radio signals from a local signal oscillation unit, and then a filter circuit attenuates image disturbing signals existing in the first intermediate frequency band. When signals of a second radio frequency band is input, the first and second mixers convert the input signals of the second radio frequency band into signals of a second intermediate frequency band by the use of second local signals from the local signal oscillation unit, and then filter circuit attenuates the image disturbing signals existing in the second intermediate frequency band. In addition, the first intermediate frequency band and the second intermediate frequency band are partly overlapped with each other.

With such a configuration, the image rejection mixer can allow the signal filter circuit to attenuate the image disturbing signals of the first intermediate frequency band and the image disturbing signals of the second intermediate frequency band whose bandwidths are different from each other. As a result, it is possible to decrease the size of the receiving device.

### BRIEF DESCRIPTION OF THE DRAWINGS

Fig. 1 is a block diagram illustrating a receiving device according to Embodiment 1 of the invention.
Fig. 2 is a block diagram illustrating an electronic apparatus mounted with the receiving device according to Embodiment 1 of the invention.
Fig. 3 is a diagram illustrating frequency characteristics of a gain of a filter circuit of the receiving device and spectrums of first and second frequency bands according to Embodiment 1 of the invention.
Fig. 4 is a block diagram illustrating a known receiving device.

### DESCRIPTION OF REFERENCE NUMERALS AND SIGNS

14: RECEIVING DEVICE
15: IMAGE REJECTION MIXER
16: INPUT TERMINAL
17: FIRST MIXER
18: SECOND MIXER
19: LOCAL SIGNAL OSCILLATION UNIT
20: FILTER CIRCUIT
21: INTERMEDIATE FREQUENCY FILTER
22: AD CONVERTER
23: DEMODULATION UNIT
24: SAMPLING SIGNAL OSCILLATION UNIT
25: LOCAL SIGNAL CONTROLLER
26: SAMPLING SIGNAL CONTROLLER

### PREFERRED EMBODIMENTS FOR CARRYING OUT THE INVENTION

### Embodiment 1

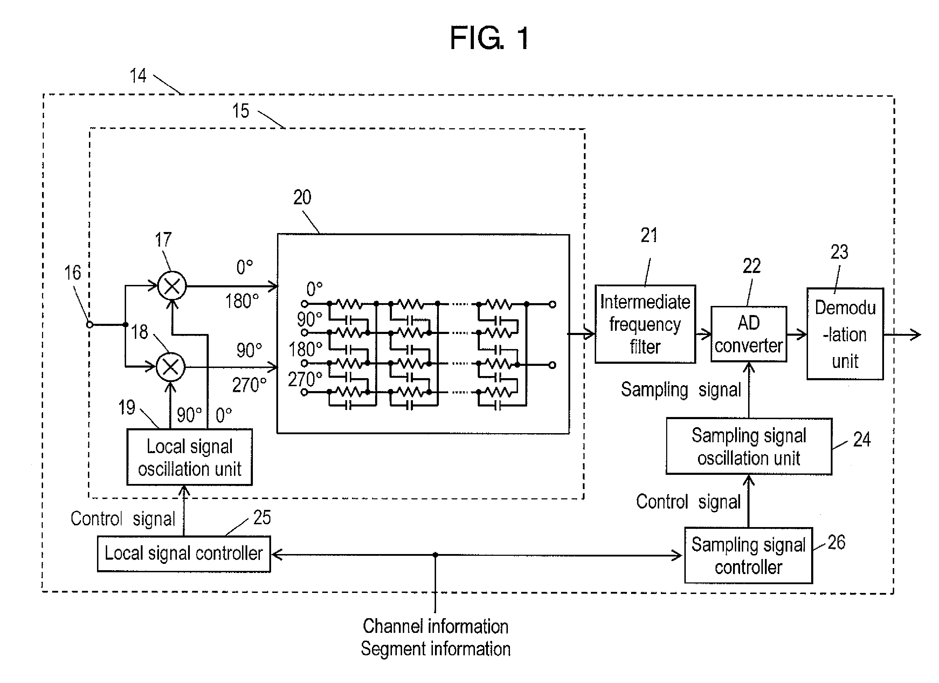

Hereinafter, Embodiment 1 of the invention will be described with reference to Fig. 1.

Fig. 1 is a block diagram illustrating a receiving device according to Embodiment 1 of the invention. In Fig. 1, image rejection mixer 15 of receiving device 14 according to the invention includes input terminal 16 to which signals of a first radio frequency band or signals of a second radio frequency band which is narrower than the first radio frequency band are input, first mixer 17 and second mixer 18 connected directly or indirectly in parallel to input terminal 16, and local signal oscillation unit 19 for transmitting local signals with a phase difference to first mixer 17 and second mixer 18. In addition, the phases of the local signals transmitted to first mixer 17 and second mixer 18 are perpendicular to each other. Image rejection mixer 15 includes filter circuit 20 which synthesizes signals from first mixer 17 and signals from second mixer 18 by rotating the phase of the signals from at least one of first mixer 17 and second mixer 18.

Receiving device 14 includes image rejection mixer 15, intermediate frequency filter 21 for attenuating unnecessary signals which cannot be attenuated by image rejection mixer 15, AD converter 22 connected to an output side of intermediate frequency filter 21, demodulation unit 23 connected to an output side of AD converter 22, and sampling signal oscillation unit 24 connected to the other input terminal of AD converter 22 for generating sampling signals.

Receiving device 14 includes local signal controller 25 for acquiring channel information and segment information from a channel setting unit (not shown) and controlling frequencies of the local signals of local signal oscillation unit 19 on the basis of the information. In addition, receiving device 14 includes sampling signal controller 26 for acquiring the channel information and the segment information from the channel setting unit and controlling sampling frequencies of sampling signal oscillation unit 24 on the basis of the information.

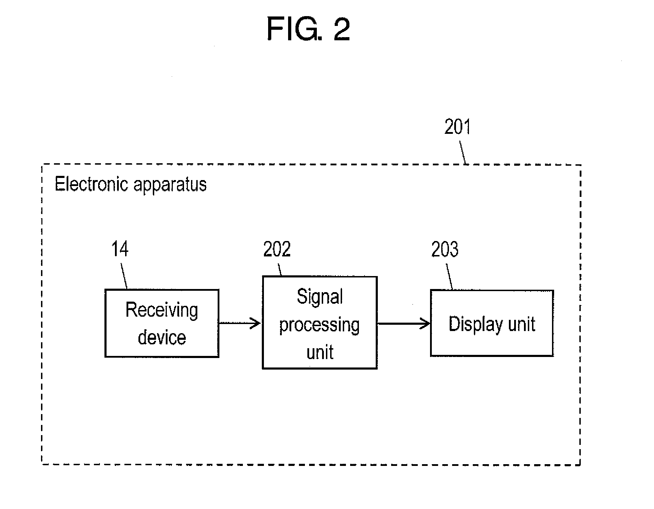

Fig. 2 is a block diagram illustrating an electronic apparatus mounted with the receiving device according to Embodiment 1 of the invention. Electronic apparatus 201 mounted with receiving device 14 includes signal processing unit 202 connected to an output side of demodulation unit 23 and display unit 203 connected to an output side of signal processing unit 202.

Next, an operation of image rejection mixer 15 will be described.

When signals of a first radio frequency band are input to input terminal 16, first mixer 17 and second mixer 18 convert the input signals of the first radio frequency band to signals of a first intermediate frequency band by the use of a first local signal from local signal oscillation unit 19, and filter circuit 20 attenuates an image disturbing signal existing in the first intermediate frequency band. In addition, when signals of a second radio frequency band are input to input terminal 16, first mixer 17 and second mixer 18 convert the input signals of the second radio frequency band to signals of a second intermediate frequency band by the use of a second local signal from local signal oscillation unit 19.

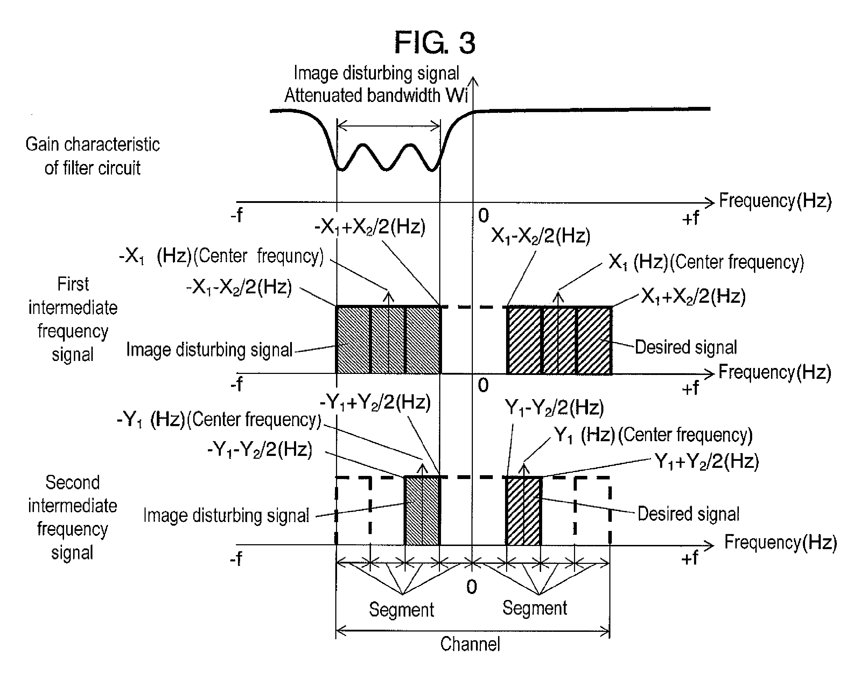

Fig. 3 is a diagram illustrating frequency characteristics of a gain of a filter circuit and spectrums of first and second frequency bands of the receiving device according to Embodiment 1 of the invention. In Fig. 3 a top portion represents gain characteristics of filter circuit 20. A vertical axis and a horizontal axis refer to a gain and a frequency, respectively. When the center refers to 0 Hz, a right side and a left side represent a positive frequency and a negative frequency, respectively. In addition, a bandwidth for attenuating the image disturbing signal refers to Wi [Hz].

A middle portion represents a spectrum of a first frequency band. When an intermediate frequency X1 [Hz] of a desired signal refers to a bandwidth X2 [Hz], an upper limit and a lower limit of the desired signal are (X₁ + X₂/2) [Hz] and (X₁ - X₂/2) [Hz], respectively. Accordingly, a center frequency of the image disturbing signal is (-X1) [Hz], and an upper limit and a lower limit are (-X₁ + X₂/2) [Hz] and (-X₁ - X₂/2) [Hz], respectively.

A lower portion represents a spectrum of the second intermediate frequency band which is narrower than the first intermediate frequency band. When a center frequency and a bandwidth of the desired signal refers to Y₁ [Hz] and Y₂ [Hz], respectively, an upper limit and a lower limit of the desired signal are (Y₁ + Y₂/2) [Hz] and (Y₁ - Y₂/2) [Hz], respectively. Accordingly, a center frequency of the image disturbing signal is (-Y₁) [Hz], and an upper limit and a lower limit are (-Y₁ + Y₂/2) [Hz] and (-Y₁ - Y₂/2) [Hz], respectively.

As shown in Fig. 3, by setting a frequency relation between the first intermediate frequency band and the second intermediate frequency band to (-X₁ - X₂/2) ≤ (-Y₁ - Y₂/2) < (-Y₁ + Y₂/2) ≤ (-X₁ + X₂/2), even when the bandwidth Wi [Hz] of filter circuit 20 is configured to be the bandwidth Y₂ [Hz] within the first intermediate frequency band, the bandwidth Wi of filter circuit 20 includes the bandwidth of the second frequency band Y₂ [Hz] so that filter circuit 20 can attenuate the image disturbing signal of the second intermediate frequency band.

With such a configuration, image rejection mixer 15 can allow single filter circuit 20 to attenuate the image disturbing signal of the first intermediate band and the image disturbing signal of the second intermediate band whose bandwidths are different. As a result, it is possible to decrease the size of receiving device 14.

In Fig. 3, as a preferred example, the first intermediate frequency band includes the entire second intermediate frequency band, but a part of the first intermediate frequency band and a part of the second intermediate frequency band can be overlapped with each other. Even in this case, receiving device 14 has the same advantage.

It is desirable that the frequency of the local signals of local signal oscillation unit 19 and the sampling frequency of sampling signal oscillation unit 24 are controlled on the basis of the channel information and the segment information from the channel setting unit so that the center frequency of the second intermediate frequency band is lower than the center frequency of the first intermediate frequency band. In this way, when receiving device 14 receives the signals of the second radio frequency band, the number of the sampling times can be decreased in AD converter 22, thereby suppressing consumption currents of AD converter 22.

It is desirable that the frequency of the local signals of local signal oscillation unit 19 and the sampling frequency of sampling signal oscillation unit 24 are controlled on the basis of the channel information and the segment information from the channel setting unit so that the lower limit of the first intermediate frequency band is equal to the lower limit of the second intermediate frequency band. In this way, when receiving device 14 receives the signals of the second radio frequency band, the number of the sampling times can be decreased in AD converter 22, thereby further suppressing the consumption currents of AD converter 22.

A part of the first radio frequency band may be within the second radio frequency band. In this way, even when receiving one segment of 3 segment broadcastings of a terrestrial digital broadcasting, for example, receiving device 14 has the same advantage.

### Industrial Applicability

A receiving device according to the invention can decrease in size and can be used in an electronic apparatus such as a cellular phone.

## Claims

1. A receiving device comprising an image rejection mixer, the image rejection mixer having:
an input terminal to which a signal of a first radio frequency band or a signal of a second frequency band which is narrower than the first radio frequency band is input;
first and second mixers connected in parallel to the input terminal;
a local signal oscillation unit for transmitting local signals with mutually different phases to the first and second mixers; and
a filter circuit synthesizing a signal from the first mixer and a signal from the second mixer by rotating the phase of the signal from at least one of the first mixer and the second mixer,
wherein when the signal of the first radio frequency band is input to the input terminal, the first and second mixers convert the input signal of the first radio frequency band into a signal of a first intermediate frequency band by the use of a first local signal from the local signal oscillation unit and the filter circuit attenuates an image disturbing signal existing in the first intermediate frequency band,
wherein when the signal of the second radio frequency band is input to the input terminal, the first and second mixers convert the input signal of the second radio frequency band into a signal of a second intermediate frequency band by the use of a second local signal from the local signal oscillation unit, and then the filter circuit attenuates an image disturbing signal existing in the second intermediate frequency band, and
wherein the first intermediate frequency band and the second intermediate frequency band are partly overlapped with each other.

2. The receiving device according to Claim 1, wherein the phase of the local signal transmitted to the first mixer is perpendicular to that of the local signal transmitted to the second mixer.

3. The receiving device according to Claim 1, wherein the first intermediate frequency band includes the second intermediate frequency band.

4. The receiving device according to Claim 1, further comprising:
an AD converter connected to an output side of the image rejection mixer; and
a sampling signal oscillation unit supplying a sampling signal to the AD converter.

5. The receiving device according to Claim 4, wherein a center frequency of the second intermediate frequency band is lower than that of the first intermediate frequency band.

6. The receiving device according to Claim 4, wherein a lower limit of the second intermediate frequency band is equal to that of the first intermediate frequency band.

7. The receiving device according to Claim 1, wherein a part of the first radio frequency band is within the second radio frequency band.

8. An electronic apparatus comprising:
an image rejection mixer having
an input terminal to which a signal of a first radio frequency band or a signal of a second frequency band which is narrower than the first radio frequency band is input,
first and second mixers connected directly or indirectly in parallel to the input terminal,
a local signal oscillation unit for transmitting local signals with mutually different phases to the first and second mixers, and
a filter circuit for synthesizing a signal from the first mixer and a signal from the second mixer by rotating the phase of the signal from at least one of the first mixer and the second mixer;
a demodulation unit connected to an output side of the image rejection mixer;
a signal processing unit connected to an output side of the demodulation unit; and
a display unit connected to an output side of the signal processing unit,
wherein when the signal of the first radio frequency band is input to the input terminal, the first and second mixers convert the input signal of the first radio frequency band into a signal of a first intermediate frequency band by the use of a first local signal from the local signal oscillation unit and the filter circuit attenuates an image disturbing signal existing in the first intermediate frequency band,
wherein when the signal of the second radio frequency band is input to the input terminal, the first and second mixers convert the input signal of the second radio frequency band into a signal of a second intermediate frequency band by the use of a second local signal from the local signal oscillation unit, and then the filter circuit attenuates an image disturbing signal existing in the second intermediate frequency band, and
wherein the first intermediate frequency band and the second intermediate frequency band are partly overlapped with each other.

## Amended claims

### Amended claims under Art. 19.1 PCT

1. (Amended) A receiving device comprising an image rejection mixer, the image rejection mixer having:
an input terminal to which a signal of a first radio frequency band or a signal of a second frequency band which is narrower than the first radio frequency band is input;
first and second mixers connected in parallel to the input terminal;
a local signal oscillation unit for transmitting local signals with mutually different phases to the first and second mixers; and
a filter circuit synthesizing a signal from the first mixer and a signal from the second mixer by rotating the phase of the signal from at least one of the first mixer and the second mixer,
wherein when the signal of the first radio frequency band is input to the input terminal, the first and second mixers convert the input signal of the first radio frequency band into a signal of a first intermediate frequency band by the use of a first local signal from the local signal oscillation unit and the filter circuit attenuates an image disturbing signal existing in the first intermediate frequency band,
wherein when the signal of the second radio frequency band is input to the input terminal, the first and second mixers convert the input signal of the second radio frequency band into a signal of a second intermediate frequency band by the use of a second local signal from the local signal oscillation unit, and then the filter circuit attenuates an image disturbing signal existing in the second intermediate frequency band,
wherein the first intermediate frequency band and the second intermediate frequency band are at least partly overlapped with each other, and
wherein a center frequency of the second intermediate frequency band is lower than that of the first intermediate frequency band.

2. The receiving device according to Claim 1, wherein the phase of the local signal transmitted to the first mixer is perpendicular to that of the local signal transmitted to the second mixer.

3. The receiving device according to Claim 1, wherein the first intermediate frequency band includes the second intermediate frequency band.

4. (Cancelled)

5. (Cancelled)

6. (Amended)The receiving device according to Claim 41, wherein a lower limit of the second intermediate frequency band is equal to that of the first intermediate frequency band.

7. The receiving device according to Claim 1, wherein a part of the first radio frequency band is within the second radio frequency band.

8. (Amended)An electronic apparatus comprising:
an image rejection mixer having
an input terminal to which a signal of a first radio frequency band or a signal of a second frequency band which is narrower than the first radio frequency band is input,
first and second mixers connected directly or indirectly in parallel to the input terminal,
a local signal oscillation unit for transmitting local signals with mutually different phases to the first and second mixers, and
a filter circuit for synthesizing a signal from the first mixer and a signal from the second mixer by rotating the phase of the signal from at least one of the first mixer and the second mixer;
a demodulation unit connected to an output side of the image rejection mixer;
a signal processing unit connected to an output side of the demodulation unit; and
a display unit connected to an output side of the signal processing unit,
wherein when the signal of the first radio frequency band is input to the input terminal, the first and second mixers convert the input signal of the first radio frequency band into a signal of a first intermediate frequency band by the use of a first local signal from the local signal oscillation unit and the filter circuit attenuates an image disturbing signal existing in the first intermediate frequency band,
wherein when the signal of the second radio frequency band is input to the input terminal, the first and second mixers convert the input signal of the second radio frequency band into a signal of a second intermediate frequency band by the use of a second local signal from the local signal oscillation unit, and then the filter circuit attenuates an image disturbing signal existing in the second intermediate frequency band,
wherein the first intermediate frequency band and the second intermediate frequency band are at least partly overlapped with each other, and
wherein a center frequency of the second intermediate frequency band is lower than that of the first intermediate frequency band.
